# EUROPÄISCHE PATENTSCHRIFT

(11) **EP 2 012 263 B1**
(45) Veröffentlichungstag und Bekanntmachung des Hinweises auf die Patenterteilung: **24.04.2013**
(21) Anmeldenummer: 08011927.4
(22) Anmeldetag: 02.07.2008
(51) Int. Cl.: G06Q 10/08, G06Q 10/00, B65G 1/137

(54) **Intelligentes Regal**
Intelligent shelving unit
Etagère intelligente

(30) Priorität: 04.07.2007 DE 102007031174
(43) Veröffentlichungstag der Anmeldung: 07.01.2009
(73) Patentinhaber: Intellion AG, 9016 St. Gallen (CH)
(72) Erfinder: Dierkes, Markus, CH-9000 St. Gallen (CH); Eisen, Stephan, CH-8832 Wollerau (CH)
(74) Vertreter: Bauer Vorberg Kayser Patentanwälte

(56) Entgegenhaltungen:
- EP-A- 0 969 272
- EP-A- 1 521 198
- WO-A-03/040914
- DE-A1- 19 651 464
- US-A1- 2003 144 926
- US-A1- 2006 164 247

## Beschreibung

Die Erfindung betrifft allgemein eine Anordnung zur Überwachung mehrerer sich an einem Aufbewahrungsort befindlicher Gegenstände, genauer mit dem Ziel, deren individuell veränderbares Anordnungsverhältnis bezüglich des Aufbewahrungsortes zu überwachen. Die Erfindung betrifft insbesondere Behälter, deren sich füllstandsbedingt änderndes Anordnungsverhältnis zum Aufbewahrungsort, beispielsweise Regal, zur Erleichterung und Vereinfachung des Bestellvorgangs überwacht wird.

Die aus Kostengründen beabsichtigte Verringerung der Lagerhaltung einer im Allgemeinen Just-in-time erfolgenden Herstellung von Produkten, die aus vielen Einzelteilen bestehen, stellt hohe Anforderungen an die Effizienz der Warenwirtschaft (d.h. an die physischen Supply-Chain- bzw. Lieferprozesse), um einen unterbrechungsfreien Materialfluss sicherzustellen. Daher bindet die Beschaffung und Bereitstellung von Teilen im Montagebereich viele Arbeiter oder erfolgt zunehmend durch externe Dienstleister.

Die Lagerung der Einzelteile erfolgt dabei im Allgemeinen in speziellen Behältern, die an einem gemeinsamen Aufbewahrungsort in einem oder mehreren Regalen gelagert werden. Um die permanente Verfügbarkeit der Teile zu garantieren, werden bei bekannten Systemen in einem aufwändigen, manuellen Prozess der Lagerstand, d.h. der Füllstand der Behälter ermittelt und daraus die entsprechenden Bestellmengen ermittelt. Diese speziellen, meist aus Kunststoff bestehenden Behälter weisen, um eine rechtzeitige Nachbestellung auszulösen, eine Trennwand auf, die den Lagerbestand in einen Verbrauchs- und einen Reservebestand aufteilt. Die Behälter werden in eigenen Regalen, die meist direkt im Montagebereich aufgestellt sind, aufbewahrt. Benötigt ein Monteur Teile, so versorgt er sich an diesen Regalen mit den entsprechenden Teilen. Der Beschaffungsprozess gliedert sich daher derzeit in folgende Schritte:
- Ermittlung durch Kontrolle des Bestandes, beispielsweise mit Hilfe der Trennwand, in dem Behältnis, ob die darin befindlichen Teile den Mindestbestand erreicht haben oder diesen in Kürze erreichen werden
- Kennzeichnung des Behälters für die Bestellung (z.B. mit Hilfe einer roten statt weißen Artikelbeschreibungskarte auf dem Behälter)
- Erfassung der Behälter, die nachbestellt werden müssen (manuell oder über Barcode)
- Übermittlung der Bestellungen an den Dienstleister (via Fax, Datenmodem, etc.)
- Der Dienstleister kommissioniert die Bestellungen zu einer Sendung
- Transport der Sendung bzw. Bestellungen zum Regal
- Auffüllung des entsprechenden Behälters.

Es hat sich gezeigt, dass der Kennzeichnungs- Erfassungs- sowie der Übermittlungsschritt sehr arbeits- und zeitaufwendig sind, und der ganze Vorgang nicht zuletzt aufgrund seiner vielen manuellen Schritte fehleranfällig ist. Die Bestandssicherheit und damit die Verfügbarkeit der zur Herstellung eines Produkts notwendigen Einzelteile ist heute nicht zu 100% gegeben, obwohl mit großem manuellen Aufwand die Erfassung der benötigten Teile erfolgt. Es besteht daher grundsätzlich Bedarf, diese Schritte so weitgehend wie möglich zu automatisieren, ohne dass dadurch ein hoher Installations- und Verkabelungsaufwand erforderlich ist.

Die Patentanmeldung US 2006/164247 A1 (OVERHULTZ GARY L [US] ET AL) 27. Juli 2006 (2006-07-27) offenbart die Überwachung eines Bestandes von Produktverpackungen auf einem Regal mit Hilfe von Sensoren wie z. B. Gewichtssensoren, optischen Sensoren oder der Messung eines elektromagnetischen Feldes einer Spule im Regal. Ein mit dem jeweiligen Sensor verbundener und am Regal angebrachter RF Transponder kann Überwachungssignale zur weiteren Verarbeitung übermitteln.

Die Offenlegungsschrift DE 196 51 464 A1 (ASSION EWALD [DE]) 18. Juni 1998 (1998-06-18) offenbart ein Verfahren zur Überwachung von Stückzahlen von kleineren Artikeln in Lagerabschnitten (z. B. Lagerbehältern), wobei jedem Lagerabschnitt ein Transponder mit einem Identifikationscode zugeordnet ist. Die Stückzahlen können durch eine Waage oder Zählvorrichtung vor und nach einer Entnahme ermittelt und in den Transpondern gespeichert werden.

Somit liegt der Erfindung die Aufgabe zugrunde, eine Anordnung ohne erheblichen Installations- und Verkabelungsaufwand bereitzustellen, die effizient und wenig fehlerträchtig die Überwachung mehrerer sich an einem Aufbewahrungsort befindlicher Gegenstände gestattet, um deren individuell veränderbares Anordnungsverhältnis bezüglich des Aufbewahrungsortes zu erfassen. Diese Aufgabe wird durch eine Anordnung gemäß Anspruch 1 gelöst. Vorteilhafte Ausgestaltungen sind Gegenstand der abhängigen Ansprüche.

Die erfindungsgemäße Anordnung umfasst mehrere Gegenstände, beispielsweise Behälter für Einzelteile eines Produktes, wobei die Gegenstände an einem jeweils dem betreffenden Gegenstand zugeordneten ortsfesten Aufbewahrungsort, beispielsweise Regal, angeordnet sind, deren Anordnungsverhältnis, beispielsweise Ausrichtung, gegenüber dem Aufbewahrungsort jedoch veränderbar ist. Die Anordnung umfasst ferner in der Nähe der Gegenstände vorgesehene Mittel zur Bestimmung einer Lageinformation, wobei diese Lageinformation das Anordnungsverhältnis jedes Gegenstands bezüglich des ortsfesten Aufbewahrungsorts beinhaltet. Die Anordnung umfasst ferner eine von dem Aufbewahrungsort entfernt angeordnete Auswerteinheit und kabellose Übertragungsmittel zur Übertragung der Gegenstand spezifischen Lageinformation von den Mitteln zur Bestimmung einer Lageinformation an die Auswerteinheit wobei die Auswerteinheit ein optisches, akustisches und/oder elektrisches, dem betreffenden Gegenstand zugeordnetes Signal erzeugt, wenn das Anordnungsverhältnis eines Gegenstands von einem vorgegebenen Anordnungsverhältnis abweicht. Dabei handelt es sich beispielsweise um ein Warnsignal.

Durch die kabellose, beispielsweise optische, akustische oder elektromagnetische Übertragung ist der Verkabelungsaufwand auf ein erforderliches Minimum verringert, gleichzeitig wird eine automatische, schnelle, weitgehend fehlerfreie und effiziente Überwachung des Anordnungsverhältnisses gewährleistet. Beispielsweise erfolgt die kabellose Übertragung per Infrarot-, Ultraschall- oder Funksignal. Diese Anordnung kann vorteilhaft bei beliebigen Gegenständen zu Anwendung kommen, deren Anordnungsverhältnis es gegenüber einem zugehörigen Aufbewahrungsort effizient und zuverlässig zu überwachen gilt.

In einer bevorzugten Ausgestaltung handelt es sich bei dem Gegenstand um einen Behälter, beispielsweise für Einzelteile oder Flüssigkeiten, wobei der Füllzustand des Behälters mit dem Anordnungsverhältnis zwischen Behälter und Aufbewahrungsort korreliert ist, beispielsweise durch Eingriff seitens einer Person, oder bevorzugt mechanisch oder elektromechanisch automatisch korreliert wird, wobei in einer bevorzugten Ausgestaltung das dem Behälter zugeordnete Signal einer Auslösung eines Befüllvorgangs des Behälters dient.

Beispielsweise handelt es sich bei dem Behälter um einen mehrere Einzelteile eines Produkts aufnehmenden Behälter, der in einem Regal in der Nähe eines Montagebereichs des Produkts angeordnet ist, um so die zur Herstellung des Produkts benötigten Waren, d.h. Einzelteile, schnell und ohne Unterbrechung bereitzuhalten. In einer anderen Ausgestaltung handelt es sich um ein Verkaufsregal, das in einem Verkaufsbereich angeordnet ist, dessen Bestand durch die erfindungsgemäße Anordnung effizient aufrechterhalten wird. Die Übertragungsmittel und die Mittel zur Bestimmung der Lageinformation können am Aufbewahrungsort, d.h. Regal, in der Nähe des Behälters oder am Behälter angeordnet bzw. angebracht sein.

Durch die Korrelation zwischen dem Füllzustand und dem Anordnungsverhältnis zwischen Behälter und Aufbewahrungsort und schließlich der Lageinformation wird der entfernt liegenden Auswerteinheit eine den Füllzustand des Behälters betreffende Information übermittelt und ferner bevorzugt ein entsprechendes Signal erzeugt, wodurch ein Nachfüllvorgang schnell und effizient ausgelöst werden kann. Beispielsweise befindet sich die Auswerteinheit in einem entfernt liegenden Überwachungsraum oder einem weit entfernt liegenden Zentrallager oder bei einem Zulieferer. Es obliegt dem Fachmann die für die Entfernung geeigneten kabellosen Übertragungsverfahren zu wählen. Beispielsweise eignen sich für große zu überbrückende Entfernungen Funknetze, gegebenenfalls auch solche mit vorhandener Infrastruktur wie WLAN-, GSM- oder GPRS-Netze usw. Es können auch Kombinationen unterschiedlicher kabelloser Übertragungsverfahren zur Anwendung kommen.

In einer einfachen Ausgestaltung erfolgt die Korrelation zwischen Füllzustand und Anordnungsverhältnis durch Eingriff einer Person, die beispielsweise den Behälter verdreht, verschiebt usw., um dessen Anordnungsverhältnis bei leerem oder nahezu leerem Zustand so zu ändern, dass diese Änderung mit dem Ziel detektiert wird, eine Wiederbefüllung auszulösen. Vorteilhaft sind der Füllzustand des Behälters mit dem Anordnungsverhältnis zwischen Behälter und Aufbewahrungsort automatisch korreliert, beispielsweise mechanisch oder elektromechanisch, wobei der Eingriff der Person vorteilhaft entfallen kann. Beispielsweise ergibt sich durch eine elastisch federnde Lagerung des Behälters eine automatische Korrelation zwischen Füllzustand und einer dadurch bedingten Änderung des Anordnungsverhältnisses.

Beispielsweise wird eine Änderung des Anordnungsverhältnisses des Gegenstandes (Behälters) gegenüber dem Aufbewahrungsort (Regal) mittels eines Metalldetektors oder mit Hilfe eines optischen Sensors detektiert. Beispielsweise kann die Bestimmung darauf basieren; dass ein optisches Signal in Abhängigkeit des Anordnungsverhältnisses ausgeblendet, ausgefiltert oder verändert wird. Beispielsweise kann bei Verwendung des Metalldetektors die Bestimmung darauf basieren, dass sich mit der Änderung des Anordnungsverhältnisses die in der Nähe des Sensors befindliche Zusammensetzung des Regals beziehungsweise des Behälters (je nachdem woran der Sensor angebracht ist) ändert.

Erfindungsgemäß umfassen die Mittel zur Bestimmung einer Lageinformation mehrere dem jeweiligen Gegenstand beziehungsweise Behälter zugeordnete Sensoren, um eine für jeden individuellen Gegenstand bzw. Behälter vorgenommene Bestimmung des Anordnungsverhältnis und damit des Füllzustands vornehmen zu können.

In einer vorteilhaften Ausgestaltung ist der Behälter gegenüber dem Aufbewahrungsort verschiebbar oder verschwenkbar, beispielsweise um 180°, angeordnet. Derartige mechanische Lösungen sind vergleichsweise einfach und kostengünstig zu realisieren, bzw. bereits vorhanden.

Gemäß einer weiteren vorteilhaften Ausgestaltung nimmt der Behälter je nach Füllzustand wenigstens zwei in der Ausrichtung des Behälters unterschiedliche statische Gleichgewichtszustände ein. Beispielsweise ist der Behälter so gelagert, dass er je nach Füllstand beispielsweise durch eine Kippbewegung automatische unterschiedliche Anordnungen einnimmt. Eine derartige automatische Füllstandsüberwachung ist vergleichsweise einfach zu realisieren.

In der erfindungsgemäßen Anordnung wird das Anordnungsverhältnis des betreffenden Gegenstands anhand der Ausrichtung eines Magnetfeldsensors gegenüber einem Magnetfeld ermittelt, wobei der Sensor oder das Magnetfeld mit dem Aufbewahrungsort, d.h. zum Beispiel dem Regal, ortsfest ist. Dies ist besonders einfach und preiswert. Beispielsweise handelt es sich bei dem ortsfesten Magnetfeld um das Erdmagnetfeld, wobei die Ausrichtung des Behälters zu diesem Erdmagnetfeld anhand eines am Behälter angebrachten Magnetfeldsensors bestimmt wird. In einer alternativen Ausgestaltung wird seitens des Aufbewahrungsort ein damit ortsfestes Magnetfeld erzeugt, beispielsweise mittels einer Magnetfolie, die auf den Regalboden aufgelegt oder angebracht wird, auf der bzw. gegenüber der der Behälter verschieb- und/oder verdrehbar angeordnet ist. So kann ein vergleichweise starkes ortsfestes Magnetfeld leicht und preiswert bereitgestellt werden und an einem Aufbewahrungsort, zum Beispiel Regal, einfach nachgerüstet werden.

Bevorzugt ist der Magnetfeldsensor am Gegenstand angebracht, da der Aufbewahrungsort leichter mit einem über die Ausdehnung des Gegenstands, bzw. Behälters, hinausgehenden und starken ortsfesten Magnetfeld ausgerüstet werden kann.

Bevorzugt handelt sich bei dem Magnetfeldsensor um einen Hallsensor. Derartige Sensoren sind preiswert erhältlich und gestatten zudem eine genaue und auch quantitative Bestimmung des Anordnungsverhältnisses zwischen Gegenstand und Aufbewahrungsort.

Die Übertragungsmittel sind in einer weiteren vorteilhaften Ausgestaltung so ausgestaltet, dass ferner eine Identifikation des jeweiligen Gegenstands durch die Auswerteinheit ermöglicht ist. Beispielsweise anhand der Frequenz des übermittelten Signals. In einer vorteilhaften, weil störungsunanfälligen, Ausgestaltung wird eine digitale Identifikationsinformation, beispielsweise mittels Keying und/oder Modulation des analogen Signals, durch das Übertragungsmittel übertragen.

In einer vorteilhaften Ausgestaltung umfassen die Übertragungsmittel jeweils einen, bevorzugt am Gegenstand angebrachten, Funksender oder -Transponder und die Auswerteinheit eine zugehörige Antenne. Derartige Funksender oder -Transponder sind bekannt und preiswert erhältlich. Beispielsweise handelt es sich um aktive oder passive Funktransponder. Aktive Funktransponder sind mit einer eigenen, d.h. zugehörigen, Energieversorgung, beispielsweise Batterie, versehen, dadurch kann vorteilhaft eine am Aufbewahrungsort bzw. Regal vorgesehene Energieversorgung entfallen. Ein passiver Funktransponder wird im Allgemeinen mittels Induktion durch ein externes elektromagnetisches Wechselfeld versorgt. Passive Funktransponder sind besonders preiswert erhältlich und weisen eine hohe Integrationsdichte auf, was die Anbringung am Gegenstand erleichtert. Beispielsweise sind passive Transponder in ein flaches Kunststoffsubstrat eingebettet (RFID-Tag).

Bei Verwendung eines passiven Transponders übernimmt dieser in einer besonders einfachen Ausgestaltung die Funktion der Mittel zur Bestimmung der Lageinformation. Dies wird dadurch erreicht, dass lediglich in einem bestimmten Anordnungsverhältnis des Gegenstands (Behälters) durch geeignete Anbringung des Transponders dieser mit Energie versorgt wird und erst dann in der Lage ist, durch geeignete Modulation des vorhandenen elektromagnetischen Wechselfeldes eine Information an die Auswerteinheit zu übertragen. Beispielsweise ist der passive Transponder so angebracht, dass er erst dann mit Energie versorgt wird, wenn er der wieder zu befüllende Behälter bezüglich des Regals in ein solches Anordnungsverhältnis verbracht wird, dass er mit Energie versorgt wird und damit beginnt, das zur Energieversorgung vorgesehene elektromagnetische Wechselfeld zu modulieren (somit zu senden). Diese Modulation wird von der Antenne der Auswerteinheit registriert und somit wird ermittelt, dass der entsprechende Behälter zu befüllen ist.

Beispielsweise erfolgt die Funkübertragung im HF-Bereich (3-30MHz) oder UHF-Bereich (850-950 MHz, 2,4-2,5 GHz, 5,8 GHz), bevorzugt bei etwa 868 MHz. Das Senden des Funktransponders kann in vorgegebenen Intervallen automatisch durch den Transponder erfolgen oder kann seitens der Auswerteinheit durch eine Abfrage des jeweiligen Transponders erfolgen.

Bevorzugt handelt es sich bei dem Funktransponder um einen UHF-Funktransponder, da hier die Reichweite vergleichsweise hoch ist, derzeit bis zu 100m für einen aktiven Funktransponder. Dies gestattet zudem auch die leichte Umpositionierung des Aufbewahrungsortes, bspw. des Regals oder auch die Erweiterung mit zusätzlichen Gegenständen, bspw. Behältern, ohne dass es einer Neuausrichtung oder Neuanordnung der Antenne der Auswerteinheit bedarf. Zur Verbesserung und Sicherstellung der Kommunikation zwischen Auswerteinheit und Funktransponder können die dem Fachmann bekannten Verfahren zur Singulation, Kollisionsvermeidung und Codierung usw. zur Anwendung kommen.

In einer bevorzugten Ausgestaltung umfasst der Funktransponder einen Mikrochip, der elektrisch mit den Mitteln zur Bestimmung der Lageinformation, beispielweise dem Magnetfeldsensor, verbunden ist. Beispielsweise wird das Messergebnis des Sensors an einem Eingang des Mikrochips bereitgestellt und dieses Messergebnis in digitaler Form durch den Funktransponder mit der Identifikation versendet.

Bei einer weiteren vorteilhaften Ausgestaltung ist vorgesehen, dass die Mittel zur Bestimmung einer Lageinformation ferner ein Mittel zur Ausgabe oder Anzeige einer dem Anordnungsverhältnis zwischen dem betreffenden Gegenstand und dem Aufbewahrungsort entsprechenden, optischen oder akustischen Information beinhalten. Beispielsweise ist ein Leuchtelement am Behälter vorgesehen. Dadurch kann unmittelbar am Ort des Behälters verifiziert werden, ob das Anordnungsverhältnis des Gegenstands (Behälters) bezüglich des Aufbewahrungsortes (Regal) verändert wurde, sei es automatisch oder durch einen Eingriff eines Bedieners. Bei Letzterem erleichtert diese Verifikationsmöglichkeit die Handhabe und unmittelbare Überprüfung durch den Bediener. Dadurch kann somit ferner verifiziert werden, ob ein Bestellvorgang ausgelöst wurde.

Die Erfindung betrifft ferner eine Verwendung der Anordnung in einer der zuvor beschriebenen Ausführungsformen in einem Warenwirtschaftssystem und bevorzugt bei der Herstellung eines aus Einzelteilen bestehenden Produkts. Dadurch wird die Bestandssicherheit erhöht, weil wenigstens nach einer Änderung des Anordnungsverhältnisses des Behälters gegenüber seinem Aufbewahrungsort, optional auch einschließlich einer automatischen Änderung, der Bestellvorgang automatisch abläuft. Es ist keine manuelle, zeit- und arbeitsintensive Erfassung der im Behälter befindlichen Einzelteile notwendig. Es bedarf keiner Schulung des dafür vorgesehenen Bedienpersonals. Die Fehlerquote bei der Erfassung ist vergleichsweise gering. Ferner kann so die Erfassung des Behälterfüllzustandes nahezu permanent erfolgen, dadurch können die Bevorratungsmengen vorteilhaft verringert werden. Zudem ergibt sich eine bessere, weil gleichmäßigere, Auslastung des Belieferungs- und Nachfüllprozesses, da aufgrund der vollkommenen Transparenz der Bestandssituation am Aufbewahrungsort, beispielsweise im Regal, in Echtzeit eine Glättung und Optimierung des Belieferungs- und Nachfüllprozesses vorgenommen werden kann.

Die Erfindung soll nun anhand des in der Zeichnung dargestellten Ausführungsbeispiels einer erfindungsgemäßen Anordnung näher erläutert werden. Es zeigt:

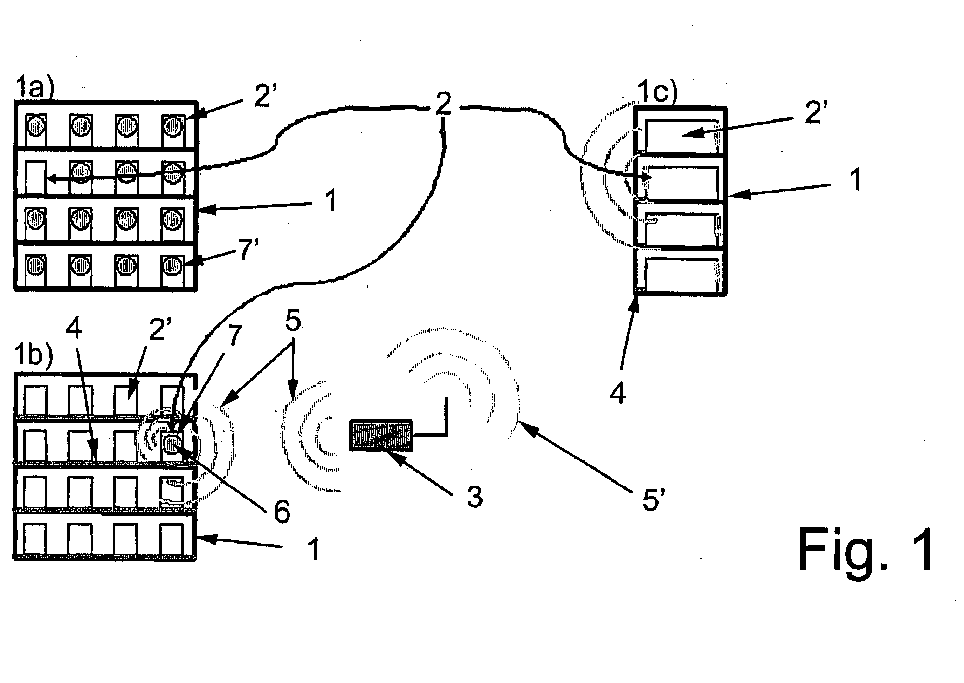

- Fig. 1: schematisch eine Ansicht eines Ausführungsbeispiels.

Figur 1 zeigt ein Ausführungsbeispiel der erfindungsgemäßen Anordnung, wobei das dem Aufbewahrungsort entsprechende Regal 1 in verschiedenen Ansichten 1a) bis 1c) gezeigt ist. 1a) zeigt eine Rückansicht des Regals 1, 1b) eine Vorderansicht des Regals 1, 1c) eine Seitenansicht des Regals 1, wobei in der Darstellung sich links die Vorderseite und rechts die Rückseite des Regals 1 befinden. In dem Regal 1 sind mehrere Einzelteile aufnehmende Behälter 2, 2' angeordnet. Deren Anordnungsverhältnis im Regal 1 veränderbar ist, d.h. im vorliegenden Fall wird die Ausrichtung des Behälters 2' durch Verdrehen des Behälters 2' um 180° auf dem Regalboden in Abhängigkeit vom Füllzustand, insbesondere bei Erreichen eines Mindestbestandes, automatisch oder durch einen Bediener manuell geändert, wobei der Behälter 2' den mit 2 bezeichneten Zustand annimmt. Dieser Mindestbestand wird beispielsweise mit Hilfe einer im Behälter vorgesehenen Trennwand ermittelt (nicht dargestellt). Dieses geänderte Anordnungsverhältnis wird durch einen Magnetfeldsensor (nicht dargestellt), beispielsweise Hallsensor, detektiert, der an den Behältern 2, 2' angebracht ist und eine Änderung des Feldes feststellt, dass durch die am Regal 1 angebrachten Magnetfolienstreifen 4 erzeugt wird. Dieses Detektionsergebnis wird an einen Mikrochip eines aktiven Funktransponders 7, 7' übermittelt, der ebenfalls am Behälter 2, 2' angebracht ist. Der Funktransponder 7, 7' dient jeweils der Funkübertragung 5 der durch den Magnetfeldsensor erzeugten Lageinformation an eine entfernt angeordnete Auswerteinheit 3. Während im Falle der Ausrichtung der Behälter 2' der Transponder 7' kein Signal bzw. ein Signal mit der entsprechenden Lageinformation (entspricht der Information: keine Befüllung notwendig) überträgt, ist der Transponder 7 in der Stellung des Behälters 2 aktiviert bzw. sendet die dieser Ausrichtung 2 entsprechende Lageinformation kabellos zusammen mit einer digitalen Behälteridentifikation an die Auswerteinheit 3. Die Auswerteinheit 3 löst einen Bestellvorgang zur Wiederbefüllung des Behälters 2 mit entsprechenden Einzelteilen aus, die anhand der Behälteridentifikation ermittelt wird.

Zur Verifizierung des für die Bestellung notwendigen Anordnungsverhältnisses ist eine optische Anzeige in Form einer blinkenden LED 6 zur Überprüfung durch den Bediener vorgesehen. Optional können weitere kabellose Übertragungsmittel 5', beispielsweise eine WLAN-, GSM- oder GPRS-Infrastruktur, vorgesehen sein, um die Wiederbefüllungsinformation an ein sich entfernt befindliches Lager und ein dort vorgesehenes ERP-System zu übertragen. Der weitere Wiederbefüllvorgang kann dann wie folgt ablaufen: Die so erhaltene Bestellung wird dann kommissioniert und an das Regal 1 angeliefert und der entsprechende Behälter 2 wieder aufgefüllt.

Der aufgefüllte Behälter 2 wird dann wieder um 180° automatisch oder manuell gedreht, d.h. in seine "Ausgangsstellung" verbracht. Der Funktransponder wird ausgeschaltet oder an die Auswerteinheit wird dann übermittelt, dass sich der Behälter 2 wieder im "Ausgangszustand" befindet.

### Bezugszeichenliste:

- 1: Regal
- 2, 2': Behälter
- 3: Auswerteinheit
- 4: Magnetfolie
- 5: Funkübertragung
- 5': kabellose Übertragungsinfrastruktur
- 6: optische Anzeige zur Verifizierung
- 7, 7': Funktransponder

## Patentansprüche

1. Anordnung aus mehreren Behältern (2, 2'), an einem jeweils dem betreffenden Behälter zugeordneten ortsfesten Aufbewahrungsort, wobei deren Anordnungsverhältnis (2 oder 2'), beispielsweise Ausrichtung, gegenüber dem Aufbewahrungsort veränderbar ist und der Füllzustand des Behälters mit dem Anordnungsverhältnis zwischen Behälter und Aufbewahrungsort korreliert ist oder mechanisch oder elektromechanisch automatisch korreliert wird,
wobei die Anordnung Mittel (4) zur Bestimmung einer Lageinformation, die anhand des Anordnungsverhältnisses jedes Behälters bezüglich des ortsfesten Aufbewahrungsorts ermittelt wird, eine vom Aufbewahrungsort (1) entfernt angeordnete Auswerteinheit (3) und kabellose Übertragungsmittel (5) zur Übertragung der Behälter spezifischen Lageinformation an die Auswerteinheit (3) umfasst,
wobei die Auswerteinheit (3) ein optisches, akustisches und/oder elektrisches, dem betreffenden Behälter zugeordnetes Signal (5') erzeugt, wenn das Anordnungsverhältnis eines Behälters (2, 2') von einem vorgegebenen Anordnungsverhältnis abweicht, und die Mittel (4) zur Bestimmung einer Lageinformation mehrere dem jeweiligen Behälter zugeordnete Sensoren umfassen, wobei die Übertragungsmittel (5) so ausgestaltet sind, dass ferner eine Identifikation des jeweiligen Behälters (2, 2') gestattet ist und wobei die Sensoren und die Übertragungsmittel (5) jeweils am Behälter (2, 2') angeordnet oder angebracht sind,
**dadurch gekennzeichnet, dass** die Mittel (4) zur Bestimmung einer Lageinformation mehrere an dem jeweiligen Behälter angeordnete oder angebrachte Magnetfeldsensoren umfassen und das Anordnungsverhältnis des betreffenden Behälters (2, 2') anhand der Ausrichtung eines Magnetfeldsensors gegenüber einem Magnetfeld (4) ermittelt wird und das Magnetfeld (4) mit dem Aufbewahrungsort (1) ortsfest ist.

2. Anordnung gemäß Anspruch 1, wobei der Aufbewahrungsort ein Regal (1) ist.

3. Anordnung gemäß einem der vorhergehenden Ansprüche, wobei der Magnetfeldsensor ein Hallsensor ist.

4. Anordnung gemäß einem der vorhergehenden Ansprüche, wobei die Übertragungsmittel (5) ein Übertragen einer digitalen Identifikationsinformation gestatten.

5. Anordnung gemäß einem der vorhergehenden Ansprüche, wobei die Übertragungsmittel jeweils einen Funksender oder-Transponder (7, 7'), bevorzugt einen aktiven Funktransponder, umfassen und die Auswerteinheit (3) eine zugehörige Antenne umfasst.

6. Anordnung gemäß dem vorhergehenden Anspruch, wobei der Funktransponder (7, 7') ein UHF-Funktransponder ist.

7. Anordnung gemäß einem der beiden vorhergehenden Ansprüche, wobei der Funktransponder (7, 7') einen Mikrochip umfasst, der elektrisch mit den Mitteln zur Bestimmung der Lageinformation, beispielsweise dem Magnetfeldsensor, verbunden ist.

8. Anordnung gemäß einem der beiden vorhergehenden Ansprüche, wobei die Mittel zur Bestimmung einer Lageinformation ein Mittel (6) zur Ausgabe oder Anzeige einer dem Anordnungsverhältnis zwischen dem betreffenden Gegenstand und dem Aufbewahrungsort entsprechenden optischen oder akustischen Information beinhalten.

9. Anordnung gemäß einem der vorhergehenden Ansprüche, wobei der Behälter (2, 2') gegenüber dem Aufbewahrungsort verschwenkbar oder verschiebbar angeordnet ist.

10. Anordnung gemäß einem der beiden vorhergehenden Ansprüche, wobei der Behälter (2, 2') je nach Füllzustand wenigstens zwei in der Ausrichtung des Behälters unterschiedliche statische Gleichgewichtszustände einnimmt.

11. Anordnung gemäß einem der vorhergehenden Ansprüche, wobei das dem Behälter zugeordnete Signal einer Auslösung eines Befüllvorgangs des Behälters dient.

12. Verwendung der Anordnung gemäß einem der vorhergehenden Ansprüche in einem Warenwirtschaftssystem, bevorzugt bei der Herstellung eines aus Einzelteilen bestehenden Produkts.

## Claims

1. An assembly consisting of several containers (2, 2') at a stationary storage location respectively assigned to the respective container, wherein their spatial relationship (2 or 2'), for instance orientation, relative to the storage location can be changed, and the filling level of the container correlates, or is automatically correlated mechanically or electromechanically, with the spatial relationship between the container and the storage location,
wherein the assembly comprises means (4) for determining a positional information, which is ascertained by means of the spatial relationship of each container relative to the stationary storage location, an evaluation unit (3) disposed distant from the storage location (1), and wireless transmission means (5) for transmitting the container-specific positional information to the evaluation unit (3),
wherein the evaluation unit (3) generates an optical, acoustical and/or electrical signal (5') associated with the respective container if the spatial relationship of a container (2, 2') deviates from a predetermined spatial relationship, and the means (4) for determining a positional information comprise several sensors associated with the respective container, wherein the transmission means (5) are configured in such a way that, furthermore, an identification of the respective container (2, 2') is permitted, and wherein the sensors and the transmission means (5) are respectively disposed on or attached to the container (2, 2'), **characterised in that** the means (4) for determining a positional information comprise several magnetic field sensors disposed on or attached to the respective container and the spatial relationship of the respective container (2, 2') is ascertained by means of the orientation of a magnetic field sensor relative to a magnetic field (4) and the magnetic field (4) is stationary with the storage location (1).

2. The assembly according to claim 1, wherein the storage location is a shelf (1).

3. The assembly according to any one of the preceding claims, wherein the magnetic field sensor is a Hall sensor.

4. The assembly according to any one of the preceding claims, wherein the transmission means (5) permit transmitting a digital identification information.

5. The assembly according to any one of the preceding claims, wherein the transmission means respectively comprise a radio transmitter or transponder (7, 7'), preferably an active radio transponder, and the evaluation unit (3) comprises an associated antenna.

6. The assembly according to the preceding claim, wherein the radio transponder (7, 7') is a UHF radio transponder.

7. The assembly according to any one of the two preceding claims, wherein the radio transponder (7, 7') comprises a microchip, which is electrically connected to the means for determining the positional information, for example the magnetic field sensor.

8. The assembly according to any one of the two preceding claims, wherein the means for determining a positional information comprises a means (6) for outputting or displaying an optical or acoustical information corresponding to the spatial relationship between the respective item and the storage location.

9. The assembly according to any one of the preceding claims, wherein the container (2, 2') is arranged in a pivotable or displaceable manner relative to the storage location.

10. The assembly according to any one of the two preceding claims, wherein the container (2, 2'), depending on the filling level, assumes at least two static states of equilibrium that are different with regard to the orientation of the container.

11. The assembly according to any one of the preceding claims, wherein the signal associated with the container serves for triggering a filling process of the container.

12. A use of the assembly according to any one of the preceding claims in a goods management system, preferably in the production of a product consisting of individual parts.

## Revendications

1. Ensemble de plusieurs récipients (2, 2'), sur un lieu fixe de dépôt qui est associé respectivement au récipient en question, le rapport de disposition de ceux-ci (2 ou 2'), par exemple l'orientation, par rapport au lieu de dépôt étant modifiable et l'état de remplissage du récipient étant en corrélation avec le rapport de disposition entre le récipient et le lieu de dépôt ou étant mis en corrélation automatiquement de façon mécanique ou électromécanique,
ledit ensemble comprenant des moyens (4) de détermination d'une information de position qui est déterminée à partir du rapport de disposition de chacun des récipients par rapport au lieu fixe de dépôt, une unité d'évaluation (3) disposée à distance dudit lieu de dépôt (1), ainsi que des moyens de transmission sans fil (5) pour transmettre, à ladite unité d'évaluation (3), l'information de position spécifique au récipient,
ladite unité d'évaluation (3) générant un signal (5') optique, acoustique et/ou électrique associé au récipient en question, lorsque le rapport de disposition d'un récipient (2, 2') est différent d'un rapport donné de disposition, et lesdits moyens (4) de détermination d'une information de position comprenant une pluralité de capteurs associés au récipient respectif, lesdits moyens de transmission (5) étant réalisés de manière à ce que, en outre, une identification du récipient respectif (2, 2') est autorisée, et lesdits capteurs et lesdits moyens de transmission (5) étant disposés ou montés chacun sur le récipient (2, 2'),
**caractérisé par le fait que** lesdits moyens (4) de détermination d'une information de position comprennent une pluralité de capteurs de champ magnétique qui sont disposés ou montés sur le récipient respectif et que le rapport de disposition du récipient (2, 2') en question est déterminé à partir de l'orientation d'un capteur de champ magnétique par rapport à un champ magnétique (4) et le champ magnétique (4) est fixe avec le lieu de dépôt (1).

2. Ensemble selon la revendication 1, dans lequel le lieu de dépôt est une étagère (1).

3. Ensemble selon l'une quelconque des revendications précédentes, dans lequel le capteur de champ magnétique est un capteur à effet Hall.

4. Ensemble selon l'une quelconque des revendications précédentes, dans lequel les moyens de transmission (5) autorisent une transmission d'une information numérique d'identification.

5. Ensemble selon l'une quelconque des revendications précédentes, dans lequel les moyens de transmission comprennent chacun un émetteur radio ou transpondeur radio (7, 7'), de préférence un transpondeur radio actif, et que ladite unité d'évaluation (3) comprend une antenne associée.

6. Ensemble selon la revendication précédente, dans lequel ledit transpondeur radio (7, 7') est un transpondeur radio UHF.

7. Ensemble selon l'une quelconque des deux revendications précédentes, dans lequel ledit transpondeur radio (7, 7') comprend une micro-puce qui est reliée électriquement auxdits moyens de détermination de l'information de position, par exemple au capteur de champ magnétique.

8. Ensemble selon l'une quelconque des deux revendications précédentes, dans lequel lesdits moyens de détermination d'une information de position renferment un moyen (6) pour sortir ou afficher une information optique ou acoustique correspondant au rapport de disposition entre l'objet en question et le lieu de dépôt.

9. Ensemble selon l'une quelconque des revendications précédentes, dans lequel ledit récipient (2, 2') est disposé de manière à pouvoir être pivoté ou déplacé par rapport au lieu de dépôt.

10. Ensemble selon l'une quelconque des deux revendications précédentes, dans lequel ledit récipient (2, 2') prend, selon l'état de remplissage, au moins deux états d'équilibre statiques différents en orientation du récipient.

11. Ensemble selon l'une quelconque des revendications précédentes, dans lequel le signal associé au récipient sert à déclencher une opération de remplissage du récipient.

12. Utilisation de l'ensemble selon l'une quelconque des revendications précédentes, dans un système économique de marchandises, de préférence lors de la fabrication d'un produit composé de pièces détachées.
